# EUROPÄISCHE PATENTSCHRIFT

(11) **EP 1 180 913 B1**
(45) Veröffentlichungstag und Bekanntmachung des Hinweises auf die Patenterteilung: **24.03.2010**
(21) Anmeldenummer: 01118205.2
(22) Anmeldetag: 28.07.2001
(51) Int. Cl.: H04R 1/10

(54) **Lautsprechervorrichtung und Gerät**
Loudspeaker device
Dispositif haut-parleur

(30) Priorität: 16.08.2000 DE 10039775
(43) Veröffentlichungstag der Anmeldung: 20.02.2002
(73) Patentinhaber: IPCom GmbH & Co. KG, 82049 Pullach (DE)
(72) Erfinder: Feustel, Sven, 30177 Hannover (DE)
(74) Vertreter: Gigerich, Jan

(56) Entgegenhaltungen:
- WO-A-00/62431
- DE-A1- 19 645 259
- US-A- 5 491 507
- US-A- 5 590 417
- US-A- 5 966 643
- US-A- 6 104 819
- PATENT ABSTRACTS OF JAPAN Bd. 1998, Nr. 01, 30. Januar 1998 (1998-01-30) & JP 09 252335 A (ANRITSU CORP), 22. September 1997 (1997-09-22)

## Beschreibung

### Stand der Technik

Die Erfindung geht aus von einem Kopfhörerelement, wie es beispielsweise von Freisprecheinrichtungen bekannt ist.

Aus der Patentschrift US 5,491,507 ist ein Video Handheld Telefon mit einer Anordnung bekannt, in der der eingebaute Lautsprecher abnehmbar montiert ist und als Ohrhörer benutzt werden kann.

Aus der Patentschrift US 5,966,643 ist ein Handheld Telefon bekannt, dessen Lautsprecher und/oder Mikrofon räumlich von den anderen Komponenten des Telefons entfernt werden kann.

### Vorteile

Die erfindungsgemäße Lautsprechervorrichtung und das erfindungsgemäße Gerät mit den Merkmalen des Hauptanspruchs haben den Vorteil, dass die Lautsprechervorrichtung zusammen mit dem Gerät benutzbar ist, ohne dass störende Kabel zwischen Lautsprechervorrichtung und Gerät vorhanden sind. Weiterhin ist es möglich, die Lautsprechervorrichtung an einem sicheren Ort zu deponieren, nämlich direkt an dem Gerät zusammen mit welchem die Lautsprechervorrichtung benutzt wird.

Weiterhin ist von Vorteil, dass die zweite Verbindung zur drahtgebundenen Signalübertragung vorgesehen ist. Dadurch können weitere Lautsprecher im elektrischen Gerät vermieden werden, da auch für diesen Fall die erfindungsgemäße Lautsprechervorrichtung Verwendung findet. Dadurch ist es möglich, das elektrische Gerät mit Lautsprechervorrichtung leichter kostengünstiger zu gestalten.

Weiterhin ist von Vorteil, dass die Lautsprechervorrichtung im äußeren Gehörgang und/oder an der Ohrmuschel eines Benutzers platzierbar und/oder arretierbar ist. Dadurch wird die Lautsprechervorrichtung sehr nah am Hörzentrum des Benutzers angebracht, so dass die zum Betrieb der Lautsprechervorrichtung erforderliche elektrische Leistung gering gehalten werden kann, was zu geringem Stromverbrauch, geringerer Batteriekapazität, längerer Batteriestandzeit und geringerem Gewicht der Lautsprechervorrichtung führt. Weiterhin ist es dadurch möglich, dass keine Halterungsvorrichtung für die Lautsprechervorrichtung benötigt wird, sondern dass der äußere Gehörgang bzw. die Ohrmuschel des Benutzers die Lautsprechervorrichtung trägt.

Weiterhin ist von Vorteil, dass in Abhängigkeit davon, ob die Lautsprechervorrichtung am Gerät arretiert ist, die erste Verbindung zur Signalübertragung zwischen der Lautsprechervorrichtung und dem Gerät vorgesehen ist. Dies hat den Vorteil, dass der Benutzer nicht zwischen den verschiedenen Betriebsarten der Kombination aus Lautsprechervorrichtung und Gerät hin- und herschalten muß, sondern dass immer der vom Benutzer gewünschte Betriebsmodus eingestellt ist, nämlich eine drahtgebundene Signalübertragung zwischen Lautsprechervorrichtung und Gerät, wenn die Lautsprechervorrichtung am elektrischen Gerät arretiert ist, und eine drahtlose Signalübertragung zwischen Lautsprechervorrichtung und Gerät, wenn die Lautsprechervorrichtung nicht am Gerät arretiert ist.

Weiterhin ist von Vorteil, dass die Lautsprechervorrichtung ein Gehäuse umfasst, wobei das Gehäuse zumindest teilweise aus elastisch und/oder plastisch verformbarem Material vorgesehen ist. Dadurch ist es mit einfachen Mitteln möglich, die Lautsprechervorrichtung bequem im oder am Ohr des Benutzers zu platzieren bzw. zu arretieren. Weiterhin wird dadurch die Arretierung der Lautsprechervorrichtung am bzw. im elektrischen Gerät erleichtert.

Weiterhin ist von Vorteil, dass die Lautsprechervorrichtung eine erste Schallaustrittsöffnung und eine zweite Schallaustrittsöffnung vorsieht und dass in Abhängigkeit der Verwendung der ersten oder der zweiten Verbindung zur Signalübertragung zwischen der Lautsprechervorrichtung und dem Gerät die erste oder die zweite Schallaustrittsöffnung beim Betrieb der Lautsprechervorrichtung hauptsächlich benutzt wird. Dadurch ist es möglich, für alle Betriebsmodi der Kombination aus Lautsprechervorrichtung und Gerät die optimale akustische Versorgung des Benutzers zu erzielen, nämlich eine Schallausbreitung in Richtung der Rückwand der Lautsprechervorrichtung zu bevorzugen, wenn die Lautsprechervorrichtung im oder am Ohr des Benutzers platziert ist, und eine bevorzugte Schallausbreitung in Richtung der Vorderseite der Lautsprechervorrichtung vorzusehen, wenn die Lautsprechervorrichtung am elektrischen Gerät arretiert ist.

Weiterhin ist von Vorteil, dass das Gerät Erkennungsmittel und Steuermittel umfasst, wobei die Erkennungsmittel vorgesehen sind, festzustellen, ob die Lautsprechervorrichtung am Gerätegehäuse arretiert ist und wobei die Steuermittel vorgesehen sind, in Abhängigkeit davon, ob die Lautsprechervorrichtung am Gerätegehäuse arretiert ist, die erste Verbindung zur Signalübertragung zwischen dem Gerät und der Lautsprechervorrichtung zu aktivieren. Dadurch ist es mit einfachen Mitteln möglich, eine automatische Umschaltung der Betriebsmodi der Kombination aus der Lautsprechervorrichtung und dem Gerät zu realisieren.

### Zeichnung

Ein Ausführungsbeispiel der Erfindung ist in der Zeichnung dargestellt und in der nachfolgenden Beschreibung näher erläutert. Es zeigen
Figur 1 ein elektrisches Gerät und die Lautsprechervorrichtung in Vorderansicht,
Figur 2 das elektrische Gerät und die Lautsprechervorrichtung in Seitenansicht und
Figur 3 eine Detailansicht der Lautsprechervorrichtung in Seitenansicht.

### Beschreibung des Ausführungsbeispiels

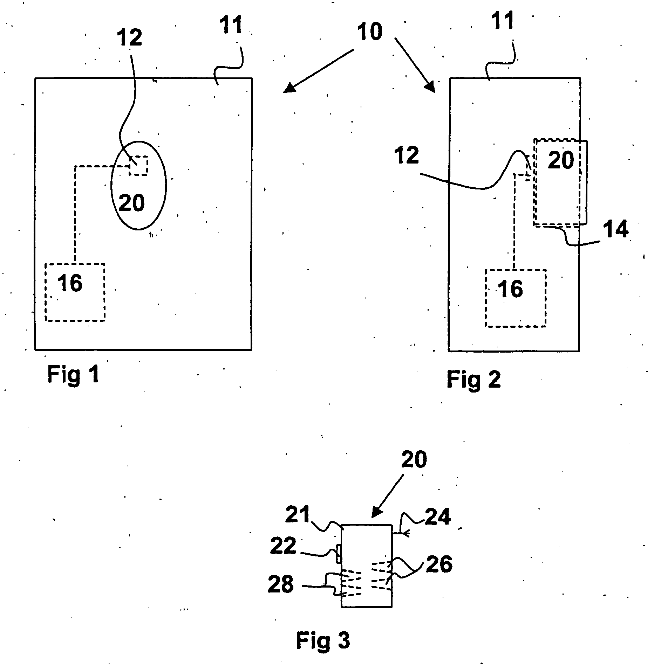

In Figur 1 ist ein elektrisches Gerät 10 zusammen mit einer dazugehörigen Lautsprechervorrichtung 20 in Vorderansicht dargestellt. Das Gerät 10 umfasst ein Gerätegehäuse 11, das mit der Lautsprechervorrichtung 20 derart zusammenwirkt, dass die Lautsprechervorrichtung 20 am Gerät 10 arretierbar ist. Dies geschieht erfindungsgemäß insbesondere dadurch, dass eine in Figur 1 nicht dargestellte Ausnehmung im Gerätegehäuse 11 die Aufnahme der Lautsprechervorrichtung 20 vorsieht. Das Gerät 10 umfasst erfindungsgemäß im Bereich der Ausnehmung im Gerätegehäuse 11 wenigstens einen ersten elektrischen Kontakt 12. Weiterhin umfasst das Gerät 10 eine Steuereinheit 16, die mit dem ersten elektrischen Kontakt 12 verbunden ist. Mittels des elektrischen Kontakts 12 ist erkennbar, ob sich die Lautsprechervorrichtung 20 in der dafür vorgesehenen Ausnehmung im Gerätegehäuse 11 befindet oder nicht. Die Information hierüber wird der Steuereinheit 16 zugeleitet.

In Figur 2 ist das Gerät 10 und die Lautsprechervorrichtung 20 in Seitenansicht dargestellt. In dieser Ansicht ist die zuvor erwähnte und mit dem Bezugszeichen 14 versehene Ausnehmung im Gerätegehäuse 11 zur Aufnahme der Lautsprechervorrichtung 20 erkennbar. Die Kontaktfläche 12 ist wiederum mit der Steuereinheit 16 verbunden.

In Figur 3 ist eine Detaildarstellung der Lautsprechervorrichtung 20 in Seitenansicht dargestellt. Die Lautsprechervorrichtung 20 umfasst ein Gehäuse 21, einen zweiten elektrischen Kontakt 22, eine drahtlose Schnittstelle 24 und sowohl wenigstens eine erste Schallaustrittsöffnung 26 und wenigstens eine zweite Schallaustrittsöffnung 28. Das Gehäuse 21 ist derart geformt, dass es leicht in den äußeren Gehörgang eines menschlichen Ohres einführbar ist bzw. am Ohr eines Benutzers arretierbar ist. Hierzu ist es erfindungsgemäß vorgesehen, das Gehäuse 21 der Lautsprechervorrichtung zumindest teilweise aus elastischem und/oder plastischem Material vorzusehen. Die Lautsprechervorrichtung 20 wird auch als Kopfhörerelement 20 oder Ear-Piece 20 bezeichnet. Die Ausnehmung 14 des Gerätegehäuses 11 ist ihrerseits so geformt, dass die Lautsprechervorrichtung 20 leicht am Gerät 10 arretierbar bzw. befestigbar ist. Hierbei ist erfindungsgemäß zum einen darauf zu achten, dass die Lautsprechervorrichtung 20 sicher und fest befestigbar ist und zum anderen, dass die Lautsprechervorrichtung 20 auch leicht und mit einfachen Mitteln vom Gerät 11 wieder lösbar ist.

Falls die Lautsprechervorrichtung 20 am Gerät 10 befestigt ist, haben der erste elektrische Kontakt 12 und der zweite elektrische Kontakt 22 miteinander Verbindung und bilden die zweite Verbindung von Lautsprechervorrichtung 20 und Gerät 10. Wenn die Lautsprechervorrichtung 20 vom Gerät 10 entnommen ist, wird über die drahtlose Schnittstelle 24 der Lautsprechervorrichtung 20 und eine entsprechende, jedoch nicht dargestellte, drahtlose Schnittstelle des Gerätes 10 eine drahtlose Verbindung zwischen dem Gerät 10 und der Lautsprechervorrichtung 20 hergestellt. Dies ist die erste Verbindung zwischen Lautsprechervorrichtung 20 und Gerät 10.

Die Umschaltung zwischen beiden Betriebsmodi der Kombination aus Lautsprechervorrichtung 20 und Gerät 10 erfolgt durch die Steuereinheit 16 im elektrischen Gerät. Hierbei ist es so, dass die bei Lösung der Lautsprechervorrichtung 20 vom Gerät 10 nicht mehr gegebene zweite Verbindung im Gerät 10 mit Hilfe von Erkennungsmitteln, beispielsweise mit Hilfe des ersten elektrischen Kontaktes 12, erkannt wird und von der Steuereinheit 16 so darauf reagiert wird, dass dann die erste Verbindung über die drahtlose Schnittstelle zwischen Lautsprechervorrichtung 20 und Gerät hergestellt wird. Über die erste Verbindung, d.h. die drahtlose Schnittstelle wird so auch der Lautsprechervorrichtung 20 signalisiert, dass ihre Rolle von diesem Zeitpunkt an nicht mehr die eines Lautsprechers des Gerätes 10 ist, sondern dass sie die Funktion eines Kopfhörerelementes 20 ausfüllt.

Erfindungsgemäß ist es insbesondere vorgesehen, dass die Lautsprechervorrichtung 20 in ähnlicher Weise in das Gerät 10 bzw. in die Ausnehmung 14 des Gerätegehäuses 11 eingesetzt wird, wie sie auch in den äußeren Gehörgang eines Benutzers bzw. in das Ohr des Benutzers eingesetzt wird. Es ergibt sich folglich eine Vorderseite der Lautsprechervorrichtung 20 und eine Rückseite der Lautsprechervorrichtung 20. Die Vorderseite der Lautsprechervorrichtung 20 entspricht derjenigen Seite, die bei ins Ohr des Benutzers eingesetzter Lautsprechervorrichtung 20 von außen am bestent sichtbar ist. Im Falle der Arretierung der Lautsprechervorrichtung 20 am bzw. im Gerät 10 soll der Schall bevorzugt in Richtung der Vorderseite abgestrahlt werden und im Fall, dass die Lautsprechervorrichtung 20 im bzw. am Ohr des Benutzers arretiert ist, soll der Schallaustritt bevorzugt in Richtung der Rückseite der Lautsprechervorrichtung 20 durchgeführt werden. Daher sind an der Lautsprechervorrichtung 20 erfindungsgemäß wenigstens eine erste Schallaustrittsöffnung 26 und wenigstens eine zweite Schallaustrittsöffnung 28 vorgesehen, wobei die erste Schallaustrittsöffnung 26 zur Vorderseite der Lautsprechervorrichtung 20 hin orientiert ist und wobei die zweite Schallaustrittsöffnung 28 zur Rückseite der Lautsprechervorrichtung 20 hin orientiert ist. Die Umschaltung der Betriebsweise der Lautsprechervorrichtung 20 hinsichtlich der hauptsächlichen Schallabstrahlung erfolgt erfindungsgemäß in Abhängigkeit der Aktivierung der ersten oder der zweiten Verbindung zur Signalübertragung zwischen der Lautsprechervorrichtung 20 und dem Gerät 10. Wird die erste Verbindung zwischen der Lautsprechervorrichtung 20 und dem Gerät 10 verwendet, d.h. die Luftschnittstelle zwischen der Lautsprechervorrichtung 20 und dem Gerät 10 ist aktiviert, dann ist davon auszugehen, dass die Lautsprechervorrichtung 20 im oder am Ohr eines Benutzers platziert ist, so dass vorrangig die zweite Schallaustrittsöffnung.28 für die Schallabstrahlung der Lautsprechervorrichtung 20 vorgesehen ist. Falls die Lautsprechervorrichtung 20 am Gerät 10 arretiert bzw. befestigt ist, so würde eine hauptsächliche Schallabstrahlung über die zweite Schallaustrittsöffnung 28 wenig Sinn machen, weil sonst hauptsächlich die Gehäuserückwand der Ausnehmung 14 des Gerätegehäuses 11 beschallt werden würde. Erfindungsgemäß ist es daher vorgesehen, im betrachteten Fall die erste Schallaustrittsöffnung 26 bevorzugt zu benutzen. Zur Umschaltung der hauptsächlichen Schallausbreitung ist es erfindungsgemäß insbesondere vorgesehen, die Lautsprechervorrichtung 20 mit einer nicht dargestellten Steuervorrichtung auszustatten, die die Umschaltung der hauptsächlichen Schallausbreitung und die Ansteuerung der in der Lautsprechervorrichtung 20 befindlichen und nicht einzeln dargestellten Lautsprecherelemente übernimmt

Eine weitere Ausführungsform der Erfindung sieht vor, dass das Gerät 10 unabhängig von der erfindungsgemäßen Lautsprechervorrichtung 20 einen weiteren, in der Zeichnung jedoch nicht dargestellten, Lautsprecher umfasst. Falls durch die Erkennungsmittel, insbesondere der erste elektrische Kontakt 12, erkannt wird, dass die Lautsprechervorrichtung 20 sich in der Ausnehmung 14 des Gerätegehäuses 11 befindet, so wird die Lautsprechervorrichtung 20 abgeschaltet und der erwähnte zusätzliche Lautsprecher zur Schallabstrahlung genutzt. Erst wenn erkannt wird, dass die Lautsprechervorrichtung 20 nicht am Gerät 10 arretiert ist, wird die Lautsprechervorrichtung 20 aktiviert und die Signalübertragung wird über die erste Verbindung, nämlich die drahtlose Schnittstelle, realisiert. In diesem Fall ist die zweite Verbindung nicht zur Signalübertragung zwischen der Lautsprechervorrichtung 20 und dem Gerät 10 vorgesehen, sondern der Begriff Verbindung ist in diesem Fall hauptsächlich mechanisch zu verstehen; die Lautsprechervorrichtung 20 ist am Gerätegehäuse 11 durch die Ausnehmung 14 arretiert. Für diesen Fall ist der zweite Kontakt 22 der Lautsprechervorrichtung 20 überflüssig, weil die zweite Verbindung keine Signalübertragung zu übernehmen hat.

Die Erfindung ist insbesondere als Freisprecheinrichtung für Bildtelefonie, ergänzt durch ins Telefon integriertes Headset zur diskreten Sprachübermittlung vorteilhaft.

Es ergibt sich der Vorteil einer Komplettnutzung des Bildtelefonierens bei Freisprechfunktion sowie beim Betrieb der Lautsprechervorrichtung 20 im oder am Ohr eines Benutzers über die drahtlose Schnittstelle, so dass keine Kabel nötig sind. Die drahtlose Verbindung ist erfindungsgemäß insbesondere als Verbindung gemäß eines Standards zur drahtlosen Datenübertragung insbesondere DECT oder Bluetooth, vorgesehen. Bei Freisprecheinrichtungen muß der Benutzer bei einem Gesprächsstoff, der vor der unmittelbaren räumlichen Umgebung geheimgehalten werden soll, das Telefon wieder zurück ans Ohr führen, um mittels einer eingebauten Fotozelle die Freisprecheinrichtung zu deaktivieren.

## Patentansprüche

1. Lautsprechervorrichtung (20) zum Betrieb mit einem elektrischen Gerät (10), wobei die Lautsprechervorrichtung (20) zur Signalübertragung mittels einer ersten Verbindung mit dem Gerät (10) verbindbar ist und die Lautsprechervorrichtung (20) mittels einer zweiter Verbindung mit dem Gerät (10) verbindbar ist, wobei die erste Verbindung drahtlos vorgesehen ist und wobei mittels der zweiten Verbindung die Lautsprechervorrichtung (20) am Gerät (10) arretierbar ist, **dadurch gekennzeichnet, dass** die Lautsprechervorrichtung (20) eine erste Schallaustrittsöffnung (26) und eine zweite Schallaustrittsöffnung (28) vorsieht und dass in Abhängigkeit der Verwendung der ersten oder der zweiten Verbindung zur Signalübertragung zwischen der Lautsprechervorrichtung (20) und dem Gerät (10) die erste oder die zweite Schallaustrittsöffnung (26, 28) beim Betrieb der Lautsprechervorrichtung (20) hauptsächlich benutzt wird.

2. Lautsprechervorrichtung (20) nach Anspruch 1, **dadurch gekennzeichnet, dass** die zweite Verbindung zur drahtgebundenen Signalübertragung vorgesehen ist.

3. Lautsprechervorrichtung (20) nach Anspruch 1 oder 2, **dadurch gekennzeichnet, dass** die Lautsprechervorrichtung (20) im äußeren Gehörgang und/oder an der Ohrmuschel eines Benutzers platzierbar und/oder arretierbar ist.

4. Lautsprechervorrichtung (20) nach einem der vorhergehenden Ansprüche, **dadurch gekennzeichnet, dass** in Abhängigkeit davon, ob die Lautsprechervorrichtung (20) am Gerät (10) arretiert ist, die erste Verbindung zur Signalübertragung zwischen der Lautsprechervorrichtung (20) und dem Gerät (10) so vorgesehen ist, dass bei nicht arretierter Lautsprechervorrichtung die erste Verbindung hergestellt ist.

5. Lautsprechervorrichtung (20) nach Anspruch 3 oder 4, **dadurch gekennzeichnet, dass** die Lautsprechervorrichtung (20) ein Gehäuse (21) umfaßt, wobei das Gehäuse (21) zumindest teilweise aus elastisch und/oder plastisch verformbarem Material vorgesehen ist.

6. Gerät (10) mit einem Gerätgehäuse (11), wobei das Gerätgehäuse (11) vorgesehen ist, eine Lautsprechervorrichtung (20) nach einem der vorhergehenden Ansprüche zu arretieren.

7. Gerät (10) nach Anspruch 6, **dadurch gekennzeichnet, dass** das Gerät (10) Erkennungsmittel (12) und Steuermittel (16) umfaßt, wobei die Erkennungsmittel (12) vorgesehen sind, festzustellen, ob die Lautsprechervorrichtung (20) am Gerätegehäuse (11) arretiert ist und wobei die Steuermittel (16) vorgesehen sind, in Abhängigkeit davon, ob die Lautsprechervorrichtung (20) am Gerätegehäuse (11) arretiert ist, die erste Verbindung zur Signalübertragung zwischen dem Gerät (10) und der Lautsprechecvorrichtung (20) so zu aktivieren dass bei nicht arretierter Lautsprechervorrichtung die erste Verbindung hergestellt ist.

## Claims

1. Loudspeaker apparatus (20) for operation with an electrical appliance (10), wherein the loudspeaker apparatus (20) can be connected for signal transmission by means of a first link to the appliance (10), and the loudspeaker apparatus (20) can be connected by means of a second link to the appliance (10), wherein the first link is provided in a wireless form and wherein the loudspeaker apparatus (20) can be locked to the appliance (10) by means of the second link, **characterized in that** the loudspeaker apparatus (20) provides a first sound outlet opening (26) and a second sound outlet opening (28), and **in that** the first or the second sound outlet opening (26, 28) is used mainly during operation of the loudspeaker apparatus (20), depending on the use of the first or the second link for signal transmission between the loudspeaker apparatus (20) and the appliance (10).

2. Loudspeaker apparatus (20) according to Claim 1, **characterized in that** the second link is intended for cable-based signal transmission.

3. Loudspeaker apparatus (20) according to Claim 1 or 2, **characterized in that** the loudspeaker apparatus (20) can be placed and/or locked in the outer auditory channel and/or on the external ear area of a user.

4. Loudspeaker apparatus (20) according to one of the preceding claims, **characterized in that,** depending on whether the loudspeaker apparatus (20) is locked to the appliance (10), the first link for signal transmission between the loudspeaker apparatus (20) and the appliance (10) is provided such that the first link is produced when the loudspeaker apparatus is not locked.

5. Loudspeaker apparatus (20) according to Claim 3 or 4, **characterized in that** the loudspeaker apparatus (20) has a housing (21), wherein the housing (21) is provided at least partially of elastically and/or plastically deformable material.

6. Appliance (10) having an appliance housing (11), wherein the appliance housing (11) is provided to clamp a loudspeaker apparatus (20) according to one of the preceding claims.

7. Appliance (10) according to Claim 6, **characterized in that** the appliance (10) has identification means (12) and control means (16), with the identification means (12) being provided in order to determine whether the loudspeaker apparatus (20) is clamped to the appliance housing (11), and with the control means (16) being provided to activate the first link for signal transmission between the appliance (10) and the loudspeaker apparatus (20), such that the first link is produced when the loudspeaker apparatus is not clamped, depending on whether the loudspeaker apparatus (20) is clamped to the appliance housing (11).

## Revendications

1. Dispositif à haut-parleur (20) destiné à être utilisé avec un appareil électrique (10), le dispositif à haut-parleur (20) pouvant être relié avec l'appareil (10) au moyen d'une première liaison pour la transmission de signal et le dispositif à haut-parleur (20) pouvant être relié avec l'appareil (10) au moyen d'une deuxième liaison, la première liaison étant prévue sans fil et le dispositif à haut-parleur (20) pouvant être fixé sur l'appareil (10) au moyen de la deuxième liaison, **caractérisé en ce que** le dispositif à haut-parleur (20) prévoit une première ouverture de sortie du son (26) et une deuxième ouverture de sortie du son (28) et que la première ou la deuxième ouverture de sortie du son (26, 28) est en fait utilisée lors du fonctionnement du dispositif à haut-parleur (20) en fonction de l'utilisation de la première ou de la deuxième liaison de transmission de signal entre le dispositif à haut-parleur (20) et l'appareil (10).

2. Dispositif à haut-parleur (20) selon la revendication 1, **caractérisé en ce que** la deuxième liaison est prévue pour une transmission filaire des signaux.

3. Dispositif à haut-parleur (20) selon la revendication 1 ou 2, **caractérisé en ce que** le dispositif à haut-parleur (20) peut être disposé et/ou fixé dans le conduit auditif externe et/ou sur le pavillon de l'oreille d'un utilisateur.

4. Dispositif à haut-parleur (20) selon l'une des revendications précédentes, **caractérisé en ce qu'**en fonction de la fixation ou non du dispositif à haut-parleur (20) sur l'appareil (10), la première liaison de transmission de signal entre le dispositif à haut-parleur (20) et l'appareil (10) est prévue de telle sorte que la première liaison est établie lorsque le dispositif à haut-parleur n'est pas fixé.

5. Dispositif à haut-parleur (20) selon la revendication 3 ou 4, **caractérisé en ce que** le dispositif à haut-parleur (20) comprend un boîtier (21), le boîtier (21) étant prévu au moins partiellement en un matériau souple et/ou plastique déformable.

6. Appareil (10) comprenant un boîtier d'appareil (11), le boîtier d'appareil (11) étant prévu pour fixer un dispositif à haut-parleur (20) selon l'une des revendications précédentes.

7. Appareil (10) selon la revendication 6, **caractérisé en ce que** l'appareil (10) comprend des moyens de détection (12) et des moyens de commande (16), les moyens de détection (12) étant prévus pour déterminer si le dispositif à haut-parleur (20) est fixé au boîtier d'appareil (11) et les moyens de commande (16) étant prévus pour, suivant la fixation ou non du dispositif à haut-parleur (20) sur le boîtier d'appareil (11), activer la première liaison de transmission de signal entre l'appareil (10) et le dispositif à haut-parleur (20) de telle sorte que la première liaison est établie lorsque le dispositif à haut-parleur n'est pas fixé.
